## Europäisches Patentamt
## European Patent Office
## Office européen des brevets

(19)

(11) Numéro de publication: **0 162 772**
**B1**

(12) # FASCICULE DE BREVET EUROPEEN

(45) Date de publication du fascicule du brevet: **07.12.88**

(51) Int. Cl.⁴: **B 60 T 11/16**

(21) Numéro de dépôt: **85400899.2**

(22) Date de dépôt: **09.05.85**

(54) Générateur de pression hydraulique.

(30) Priorité: **22.05.84 ES 532679**

(43) Date de publication de la demande:
**27.11.85 Bulletin 85/48**

(45) Mention de la délivrance du brevet:
**07.12.88 Bulletin 88/49**

(84) Etats contractants désignés:
**DE FR GB IT**

(56) Documents cités:
**EP-A-0 045 232**
**EP-A-0 045 233**
**DE-U-7 237 709**
**DE-U-8 335 919**
**FR-A-2 361 258**
**US-A-3 191 385**

(73) Titulaire: **BENDIX ESPANA S.A.**
**Balmes 243**
**Barcelona 6 (ES)**

(72) Inventeur: **Simon Bacardit, Juan**
**Calle Mallorca 451 No.6 4a4**
**Barcelona 13 (ES)**
Inventeur: **Montornes Folch, Carlos**
**Avenida Pomar 8, 3o, 2a Badalona**
**Barcelona (ES)**

(74) Mandataire: **Lejet, Christian et al**
**Division Technique Service Brevets BENDIX**
**Europe 126, rue de Stalingrad**
**F-93700 Drancy (FR)**

EP 0 162 772 B1

Courier Press, Leamington Spa, England.

**Description**

La présente invention concerne les générateurs de pression hydraulique, notamment les maître-cylindres pour systèmes d'embrayage ou de freinage de véhicules automobiles, et plus particulièrement un générateur de pression hydrauli-que comprenant un corps formé avec un alésage unique dans lequel est monté à coulissement au moins un piston délimitant dans l'alésage une chambre de pression communiquant en permanence avec un circuit utilisateur, le piston présentant une surface latérale lisse et une extrémité frontale formant un passage de fluide périphérique et coopérant à coulissement étanche avec une paire de coupelles d'étanchéité montées fixes dans des rainures annulaires formées dans la surface intérieure de l'alésage, entre lesquelles coupelles débouche un passage de communication entre la chambre et un réservoir, au moins une rainure longitudinale étant formée dans la surface intérieure de l'alésage sur une partie de la longueur axiale de la chambre jusqu'au passage de communication correspondant.

Un générateur de ce type (en l'occurence un générateur tandem) est décrit dans le document EP-A-0 045 232 au nom de la demanderesse, dont le contenu est supposé intégré ici pour référence. L'agencement de la gorge longitudinale, des paires de coupelles et de l'extrémité frontale formant passage de fluide périphérique de chaque piston décrit dans ce document présente l'avantage de permettre une réduction substantielle de la longueur hors-tout du générateur. Toutefois, la demanderesse a constaté que la formation de la gorge longitudinale sur une portion de la longueur de chaque chambre et des rainures annulaires des coupelles, notamment du piston secondaire, présentait des difficultés de réalisation. Un autre exemple de réalisation d'un tel générateur est decrit dans le document FR-A-2 361 258 qui correspond au preambule de la revendication 1.

La présente invention a pour objet des perfectionnements aux générateurs du type ci-dessus permettant de réduire notablement les coûts de fabrication sans affecter la fiabi lité et la compacité du générateur.

Pour ce faire, selon l'invention, la rainure longitudinale s'étend sur la totalité de la longueur de l'alésage. La chambre ayant un fond (opposé au piston) constitué par un élément d'obturation rapporté sur le corps, avantageusement vissé de manière étanche dans une extrémité taraudée de diamètre élargi de l'alésage du corps.

La demanderesse a par ailleurs constaté qu'un tel agencement de générateur permettait en outre, dans le cas d'un générateur ou maître-cylindre tandem, de simplifier grandement les moyens de retenue du piston secondaire, compte tenu notamment de la grande faculté d'intégration autorisée par la structure simplifiée des pistons.

La présente invention a donc pour autre objet de réduire également les coûts de montage d'un tel maître-cylindre tandem en proposant un agencement intérieur simple, robuste et fiable, et également de coûts de fabrication réduits.

Pour ce faire, selon une autre caractéristique de l'invention, dans un maître-cylindre tandem à deux pistons montés dans le même alésage, comprenant un premier ressort entre les pistons primaire et secondaire, un second ressort entre le piston secondaire et le fond de la chambre secondaire, et un moyen de butée de retenue du piston secondaire dans sa position de repos, ce moyen de butée de retenue comprend une cage tubulaire fixée sur l'élément d'obturation, au travers de laquelle s'étend à coulissement une partie de prolongation centrale du dpiston secondaire comportant une tête d'extrémité coopérant en appui, en position de repos, contre une extrémité rabattue vers l'intérieur de la cage.

Selon encore une autre caractéristique de l'invention, concourrant à la réduction des coûts de fabrication et de montage et assurant une position de repos parfaitement définie pour le piston secondaire, la cage comporte, à son extrémité opposée à l'extrémité rabattue vers l'intérieur, une collerette de montage s'étendant radialement vers l'extérieur et formant surface d'appui pour le second ressort, la cage étant fixée à l'élément d'obturation par la périphérie extérieure de cette collerette.

D'autres caractéristiques et avantages de la présente invention ressortiront de la description suivante de modes de réalisation, donnés à titre illustratif mais nullement limitatif, faite en relation avec les dessins annexés, sur lesquels:

- la Figure 1 est une vue en coupe longitudinale d'un générateur de pression hydraulique selon l'invention;

- la Figure 2 est une vue en coupe longitudinale d'un premier mode de réalisation d'un maître-cylindre tandem selon l'invention;

- la Figure 3 est une vue en coupe longitudinale d'un second mode de réalisation d'un maître-cylindre tandem selon l'invention; et

- la Figure 4 est une demi vue en coupe longitudinale d'un autre mode de réalisation d'un maître-cylindre tandem selon l'invention.

Dans la description qui va suivre et sur les dessins, les éléments identiques ou analogues portent les mêmes chiffres de référence, éventuellement indicés.

Le générateur de pression hydraulique comprend généralement un corps tubulaire 1 traversé longitudinalement par un alésage unique 2 se terminant, à une extrémité, par une extrémité taraudée de diamètre élargi 3 destinée à recevoir un élément d'obturation 4 présentant un filetage périphérique 5 coopérant avec le taraudage 3. Dans l'alésage 2 est disposé au moins un piston 6 comportant une cavité intérieure 7 de réception d'une tige d'actionnement 70 et présentant une configuration générale tubulaire. Le piston présente une surface latérale périphérique lisse et coopère à coulissement étanche avec une paire de coupelles d'étanchéité axialement espacées l'une de l'autre 9a, 9b, montées fixes dans des rainures annulaires formées dans la surface intérieure de l'alésage 2. Le piston 6 délimite ainsi, dans l'alésage 2, une chambre 110 (limitée de l'autre côté par l'élément d'obturation 4). Entre les coupelles 9a et 9b débouche dans l'alésage 2 un passage 13 destiné à être relié, par un raccord 14, à un réservoir de fluide hydraulique (non représenté).

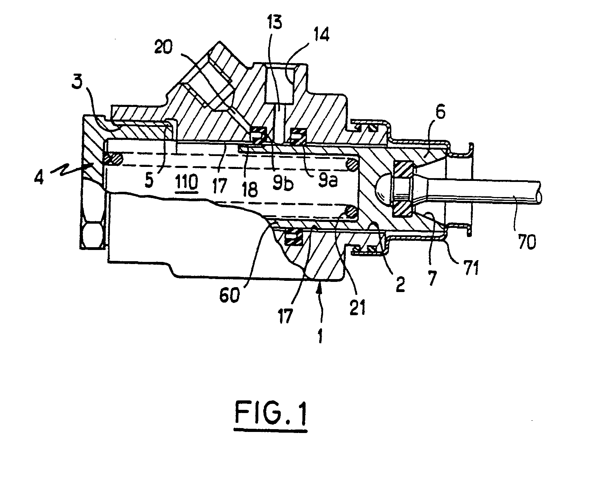

Conformément à un aspect de l'invention, dans la surface intérieure de l'alésage 2 est formée au moins une, typiquement au moins deux, en pratique quatre rainures longitudinales 17 s'étendant chacune sur toute la longueur de l'alésage 2 et débouchant aux deux extrémités de ce dernier. Le piston 6 comporte, à son extrémité avant, un chanfrein périphérique ou des courtes rainures axiales 18 formant, avec les rainures 17, un passage de compensation et de dilatation entre la chambre 110 et le passage 13. La chambre 110 communique en permarnence avec un circuit récepteur hydraulique, par exemple d'embrayage (non représenté). Dans le mode de réalisation de la Figure 1, l'orifice de sortie 20 de la chambre 110 débouche dans la gorge annulaire de la coupelle avant 9b qui communique en permanence avec la chambre 100 via les rainures 17 quelle que soit la position du piston 6 dans l'alésage 2. Le piston 6 coopère avec un ressort de rappel 21 disposé dans la chambre 110, partiellement reçu dans un évidement en retrait central du piston 6 et prenant appui contre l'élément d'obturation 4. Dans l'exemple de la Figure 1, le piston est retenu dans l'alésage 2 par une cage extérieure 71 rapportée sur l'extrémité arrière du corps 1.

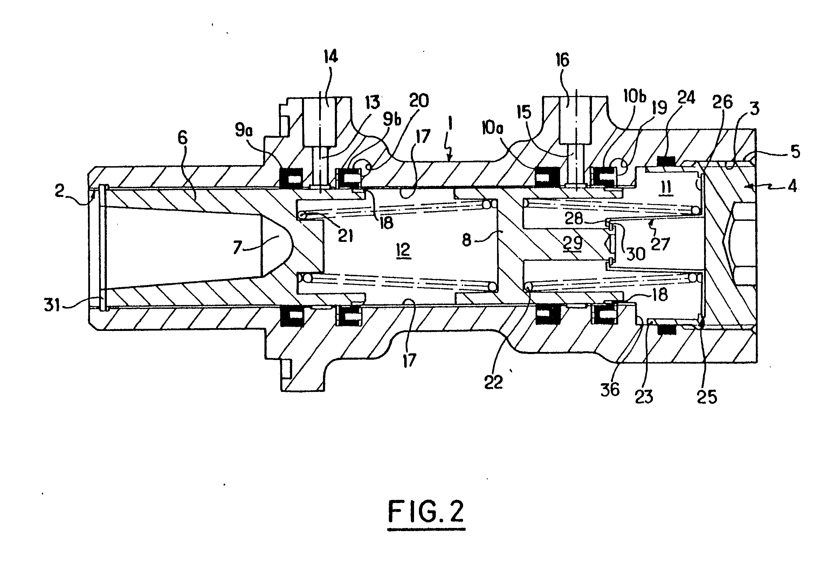

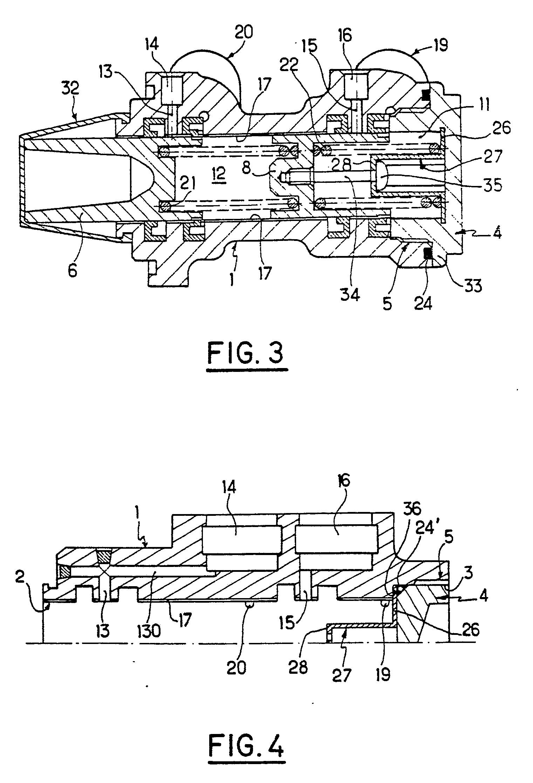

On a représenté sur les Figures 2 à 4 des modes de réalisation de maître-cylindres tandem compacts conformes à l'invention. Chaque maître-cylindre tandem comporte pareillement un alésage unique traversant 2, pourvu de rainures longitudinales traversantes 17 et recevant des pistons primaire 6 et secondaire 8 analogues chacun au piston 6 du mode de réalisation de la Figure 1. Le piston secondaire 8 délimite, dans l'alésage 2, une chambre secondaire 11 (limitée de l'autre côté par l'élément d'obturation 4) et une chambre primaire 12 (limitée, du côté opposé à l'élément d'obturation 4, par le piston primaire 6), les deux chambres étant hermétiquement séparées l'une de l'autre. Comme pour le mode de réalisation de la Figure 1, entre les coupelles 9a et 9b du piston primaire débouche dans l'alésage 2 un passage 13 destiné à être relié, par un raccord 14, à un réservoir de fluide hydraulique de freinage (non représenté), tandis que, de façon similaire, entre les coupelles 10a et 10b du piston secondaire débouche un passage de communication 15 destiné à être relié, via un raccord 16, audit réservoir (ou à un réservoir séparé). Chaque piston 6 ou 8 comporte également, à son extrémité avant, des courtes rainures ou un chanfrein périphérique 18 formant, avec les rainures 17, un passage de compensation ou de dilatation entre la chambre de pression correspondante (11 ou 12) et le passage de communication correspondant (15 ou 13). Chaque chambre de pression, 11 ou 12, communique en permanence avec un circuit de freins respectif. Dans l'exemple représenté sur la Figure 2, comme dans le mode de réalisation de la Figure 1, les passages de sortie 19 et 20 des chambres 11 et 12 vers les circuits de freins respectifs débouchent au droit de la face avant de la coupelle avant (9b; 10b) de chaque paire de coupelles et communique ainsi en permanence, via les rainures longitudinales 17, avec la chambre de pression correspondante. Dans le mode de réalisation de la Figure 4, ces passages 19 et 20 débouchent dans les chambres respec-tives 11 et 12 au voisinage du fond de ces dernières, en communication également avec au moins une des rainures longitudinales 17. Entre les deux pistons 6 et 8 est disposé, dans la chambre de pression primaire 12, un premier ressort 21, dont les extrémités sont logées dans des parties intérieures en retrait des pistons. Dans la chambre secondaire 11 est disposé un second ressort 22 partiellement reçu dans un évidement en retrait central du piston secondaire 8 et prenant appui contre l'organe d'obturation 4.

Dans le mode de réalisation selon la Figure 2, l'organe d'obturation 4 comporte un prolongement tubulaire antérieur 23 coopérant périphériquement avec la partie de diamètre élargi de l'alésage 2 pourvue d'un joint annulaire d'étanchéité 24. Au niveau de la zone de raccordement entre le prolongement tubulaire 23 et le fond de l'organe d'obturation 4 est ménagée une gorge annulaire 25 dans laquelle est engagée élastiquement, par sa périphérie, une collerette annulaire s'étendant radialement vers l'extérieur 26 d'une cage tubulaire 27 faisant saillie axialement dans la chambre secondaire 11 et partiellement dans l'évidement central du piston secondaire 8. L'extrémité de la cage 27 opposée à la collerette 26 forme une collerette annulaire rabattue radialement vers l'intérieur 28 et définissant un orifice central au travers duquel s'étend librement un prolongement cylindrique central 29 du piston secondaire 8, formé d'une seule pièce avec ce dernier dans le mode de réalisation de la Figure 2. Sur l'extrémité extérieure du prolongement central 29 est monté un circlips 30 coopérant normalement en butée avec la collerette 28 dans la position de repos des pistons 6 et 8 vers laquelle ces derniers sont sollicités par les ressorts 21 et 22. Dans le mode de réalisation de la Figure 2, le piston primaire 6 est maintenu en position de repos par une bague annulaire 31 montée dans l'extrémité de l'alésage 2 opposée à l'organe d'obturation 4. On comprendra que, avec un tel agencement, les rainures longitudinales 17 peuvent être aisément pratiquées dans l'alésage 2, par exemple par simple brochage, les rainures annulaires recevant les coupelles 10a et 10b du piston secondaire pouvant aisément être usinées à partir de l'extrémité à diamètre élargi de l'alésage 2. Au montage, l'ensemble élément d'obturation 4/cage 27/ressort 22/piston secondaire 8 peut être aisément mis en place dans le corps 1, la cage 27 formant, par sa collerette 26, la surface d'appui antérieure pour le ressort 22 ainsi que canon de guidage pour ce dernier et déterminant avec précision la position de repos du piston secondaire 8 indépendamment des variations de tolérance de tarage des ressorts 21 et 2.

Le mode de réalisation représenté sur la Figure 3 se distingue de celui décrit ci-dessus en ce sens qu'il comporte, comme dans le mode de réalisation de la Figure 1, un corps 1 extra-court au delà duquel fait partiellement saillie l'extrémité antérieure du piston primaire 6, ce dernier étant ici maintenu en place, à l'encontre de la sollicitation élastique du ressort 21 lors du transport et avant couplage à la tige d'actionnement (typiquement intégrée à un servomoteur d'assistance pneumatique) par un capuchon amovible 32 monté sur l'extrémité du corps 1 opposée à l'élément d'obturation 4. Ce dernier présente ici une partie formant collerette s'étendant radialement vers l'extérieur 33 venant porter contre un face d'appui annulaire à l'extrémité du corps 1 pourvue du joint d'étanchéité 24. Dans ce mode de réalisation, le prolongement central du piston secondaire 8 est constitué d'un boulon 34 vissé dans le piston 8 et pourvu d'une tête d'extrémité 35 reçue dans la cage tubulaire 27 et coopérant en butée avec la collerette d'extrémité 28 de cette dernière.

Dans le mode de réalisation représenté sur la Figure 4, l'organe d'obturation 4 ne comporte pas de prolongement tubulaire antérieur et la collerette de montage 26 de la cage 27 est bloquée entre la face avant de l'organe d'obturation 4 et l'épaulement 36 de raccordement entre l'alésage 2 et la partie taraudée de diamètre élargi 3, un joint d'étanchéité 24' étant interposé à cet endroit entre la collerette 26 et la face avant de l'élément obturateur 4. Dans ce mode de réalisation, correspondant à un maître-cylindre destiné à être partiellement intégré dans un servomoteur d'assistance pneumatique, le passage de communication 13 débouchant dans l'alésage 2 pour établir une communication entre la chambre primaire et le réservoir comporte une portion 130 formée longitudinalement dans l'extrémité du corps 1 opposée à l'élément d'obturation 4 et destinée à être intégrée dans le servomoteur d'assistance pneumatique susmentionné.

## Revendications

1. Générateur de pression hydraulique, comprenant un corps (1) formé avec un alésage unique (2) dans lequel est monté à coulissement au moins un piston (6) délimitant dans l'alésage une chambre de pression (110, 11), communiquant en permanence (20, 19) avec un circuit utilisateur, la chambre (110, 11) ayant un fond constitué par un élément d'obturation (4) rapporté sur le corps (1), le piston (6) présentant une surface latérale lisse et une extrémité frontale formant un passage de fluide périphérique (18) et coopérant à coulissement étanche avec une paire de coupelles d'étanchéité annulaires (9a, 9b) montées fixes dans des rainures annulaires formées dans la surface intérieure de l'alésage (2), entre lesquelles coupelles débouche un passage de communication (13) entre la chambre (110, 11) et un réservoir, au moins une rainure longitudinale (17) étant formée dans la surface intérieure de l'alésage lequel alésage (2) traverse de part en part le corps (1) caractérisé en ce que la rainure longitudinale (17) s'étend sur la totalité de la longueur de l'alésage (2).

2. Générateur selon la revendication 1, caractérisé en ce que l'élément d'obturation (4) est vissé dans une extrémité taraudée de diamètre élargi (3) de l'alésage (2).

3. Générateur selon la revendication 1 ou la revendication 2, caractérisé en ce qu'il comprend, dans l'alésage (2) un piston primaire (6) et un piston secondaire (8) délimitant dans l'alésage une chambre de pression primaire (12) et une chambre de pression secondaire (11) communiquant chacune en permanence (20, 19) avec un circuit utilisateur respectif.

4. Générateur selon la revendication 3, caractérisé en ce qu'il comprend un premier ressort (21) entre les deux pistons (6, 8) un second ressort (22) entre le piston secondaire (8) et le fond (4) de la chambre secondaire (11), et un moyen de butée (29, 34-35; 27-28) de retenue du piston secondaire (8) dans sa position de repos, le moyen de butée comprenant une cage tubulaire (27) fixée sur l'élément d'obturation (4), au travers de laquelle s'étend à coulissement une partie de prolongation centrale (29; 34) du piston secondaire (8) comportant une tête d'extrémité (30; 35) coopérant en appui, en position de repos, contre une extrémité rabattue vers l'intérieur (28) de la cage (27).

5. Générateur selon la revendication 4, caractérisé en ce que la cage (27) comporte, à son extrémité opposée à l'extrémité rabattue vers l'intérieur (28), une collerette de montage (26) s'étendant radialement vers l'extérieur et formant surface d'appui pour le second ressort (22).

6. Générateur selon la revendication 5, caractérisé en ce que la cage (27) est fixée à l'élément d'obturation (4) par la périphérie extérieure de la collerette (26).

7. Générateur selon la revendication 6, caractérisé en ce que la périphérie extérieure de la collerette, (26) de la cage (27) est engagée dans une gorge annulaire intérieure (25) de l'élément d'obturation (4).

8. Générateur selon l'une des revendications 4 à 7, caractérisé en ce que la partie de prolongation centrale (29) du piston secondaire (8) est formée d'une seule pièce avec ce dernier.

9. Générateur selon la revendication 6, caractérisé en ce que la périphérie extérieure de la collerette (26) de la cage (27) est serrée entre l'élément d'obturation (4) et un épaulement intérieur (36) du corps (1).

10. Générateur selon l'une des revendications 3 à 9, caractérisé en ce que le passage de communication (13) de la chambre primaire (12) comprend une portion (130) formée longitudinalement dans le corps (1).

**Patentansprüche**

1. Hydraulischer Druckerzeuger mit einem Gehäuse (1), das in einer einzigen Bohrung (2) gebildet ist, in welcher mindestens ein Kolben (6) gleitend gelagert ist, wobei der Kolben in der Bohrung eine Druckkammer (110, 11) begrenzt, die permanent (20, 19) mit einem Verbraucherkreis in Verbindung steht, die Kammer (110, 11) einen Boden aufweist, der von einem am Gehäuse (1) angebrachten Verschlußteil (4) gebildet wird, der Kolben (6) eine glatte Seitenfläche und ein vorderes Ende aufweist, das einen Strömungsmittel-Umfangskanal (18) bildet und abgedichtet gleitend mit zwei Dichtringen (9a, 9b) zusammenwirkt, die in Ringnuten der Innenfläche der Bohrung (2) fest angebracht sind, zwischen welchen Dichtringen ein Verbindungskanal (13) zur Verbindung zwischen der Kammer (110, 11) und einem Reservoir mündet, mindestens eine Längsnut (17) in der Innenfläche der Bohrung gebildet ist, welche Bohrung (2) das Gehäuse (1) ganz durchdringt, dadurch gekennzeichnet, daß die Längsnut (17) sich über die gesamte Länge der Bohrung (2) erstreckt.

2. Druckerzeuger nach Anspruch 1, dadurch gekennzeichnet, daß das Verschlußteil (4) in ein mit Gewinde versehenes Ende (3) vergrößerten Druchmessers der Bohrung (2) eingeschraubt ist.

3. Druckerzeuger nach Anspruch 1 oder 2, dadurch gekennzeichnet, daß er in der Bohrung (2) einen ersten Kolben (6) und einen zweiten Kolben (8) aufweist, die in der Bohrung eine erste Druckkammer (12) und eine zweite Druckkammer (11) begrenzen, welche permanent (20, 19) mit einem entsprechenden Verbraucherkreis in Verbindung stehen.

4. Druckerzeuger nach Anspruch 3, gekennzeichnet durch eine erste Feder (21) zwischen den beiden Kolben (6, 8), eine zweite Feder (22) zwischen dem zweiten Kolben (8) und dem Boden (4) der zweiten Kammer (11) und eine Anschlageinrichtung (29, 34-35; 27-28), die den zweiten Kolben (8) in seiner Ruhestellung hält, wobei die Anschlageinrichtung einen rohrförmigen Käfig (27) aufweist, der an dem Verschlußteil (4) befestigt ist, über das sich gleitend ein zentraler Verlängerungsabschnitt (29; 34) des zweiten Kolbens (8) erstreckt, welcher an seinem Ende einen Kopf (30; 35) aufweist, der in der Ruhestellung anlagemäßig mit einem nach innen umgebogenen Ende (28) des Käfigs (27) zusammenwirkt.

5. Druckerzeuger nach Anspruch 4, dadurch gekennzeichnet, daß der Käfig (27) an seinem Ende, das dem nach innen umgebogenen Ende (28) entgegengesetzt ist, eine Montage-Ringscheibe (26) aufweist, die sich radial nach außen erstreckt und eine Anlagefläche für die zweite Feder (22) bildet.

6. Druckerzeuger nach Anspruch 5, dadurch gekennzeichnet, daß der Käfig (27) an dem Verschlußteil (4) über den Außenumfang der Ringscheibe (26) befestigt ist.

7. Druckerzeuger nach Anspruch 6, dadurch gekennzeichnet, daß der Außenumfang der Ringscheibe (26) des Käfigs (27) in eine innere Ringnut (25) des Verschlußteils (4) greift.

8. Druckerzeuger nach einem der Ansprüche 4-7, dadurch gekennzeichnet, daß der zentrale Verlängerungsabschnitt (29) des zweiten Kolbens (8) einstückig mit dem letzteren ausgebildet ist.

9. Druckerzeuger nach Anspruch 6, dadurch gekennzeichnet, daß der Außenumfang der Ringscheibe (26) des Käfigs (27) zwischen dem Verschlußteil (4) und einer inneren Schulter (36) des Gehäuses (1) eingespannt ist.

10. Druckerzeuger nach einem der Ansprüche 3-9, dadurch gekennzeichnet, daß der Verbindungskanal (13) der ersten Kammer (12) einen Abschnitt (130) aufweist, der längs verlaufend im Gehäuse (1) gebildet ist.

**Claims**

1. A hydraulic pressure generator, comprising a body (1) formed with a single bore (2) wherein is slidingly mounted at least one piston (6) delimitating within the bore a pressure chamber (110, 11) in permanent communication (20, 19) with a hydraulic utilizing circuit, the pressure chamber (110, 11) having a bottom formed by an obturator member (4) mounted onto the body (1), the piston (6) having a smooth lateral tubular surface and a front end forming a peripheral fluid passage (18) and cooperating in sealing sliding engagement with a pair of annular seals (9a, 9b) fixedly mounted in annular grooves formed in the interior surface of the bore (2), between which seals there opens a passage (13) for establishing communication between the pressure chamber (110, 11) and a reservoir, at least one longitudinal groove (17) being formed in the interior surface of the bore (2), the bore (2) extending throughout the body (1) from end to end, characterized in that the longitudinal groove (17) extends over the entire length of the bore (2).

2. A hydraulic pressure generator according to claim 1, characterized in that the obturator member (4) is screwed into a threaded end of enlarged diameter (3) of the bore (2).

3. A hydraulic pressure generator according to claim 1 or to claim 2, characterized in that it comprises, within the bore (2) a primary piston (6) and an axially spaced secondary piston (8) which delimitate within the bore (2) sealingly separated primary (12) and secondary (11) pressure chambers each communicating permanently (20, 19) with respective utilizing circuits.

4. A hydraulic pressure generator according to claim 3, characterized in that it comprises a first spring (21) between the two said pistons (6, 8), a second spring (22) between the secondary piston (8) and the bottom (4) of the secondary chamber (11), and a stop means (29, 34, 35, 27, 28) for retaining the secondary piston (8) in its rest position, the stop means comprising a tubular cage (27) which is fixed onto the obturator member (4) and through which cage there slidingly extends a central extension portion (29; 34) of the secondary piston (8) formed with a terminal head (30; 35) cooperating in bearing engagement, in the rest position, against one inwardly bent portion (28) of the cage (27).

5. A hydraulic pressure generator according to claim 4, characterized in that the cage (27) comprises, at its end opposite said inwardly bent end portion (28), a radially outwardly extending assembly flange (26) forming a bearing surface for the second spring (22).

6. A hydraulic pressure generator according to claim 4, characterized in that the cage (27) is fixed to the obturator member (4) by the exterior peripheric portion of said assembly flange (26).

7. A hydraulic pressure generator according to claim 6, characterized in that the exterior peripheric portion of the flange (26) of the cage (27) is engaged into an interior annular groove (25) in the obturator member (4).

8. A hydraulic pressure generator according to any of claims 4 to 7, characterized in that the central extension portion (29) of the secondary piston (8) is formed integral with the latter.

9. A hydraulic pressure generator according to claim 6, characterized in that the exterior peripheric portion of the flange (26) of the cage (27) is gripped between the obturator member (4) and an interior shoulder (36) of the body (1).

10. A hydraulic pressure generator according to any of the claims 3 to 9, characterized in that the communication passage (13) of the primary chamber (12) comprises a portion (130) which longitudinally extends within the body (1).

## FIG.1

FIG.2

2

FIG. 3

FIG. 4